# FASCICULE DE BREVET EUROPEEN

(11) **EP 1 448 425 B1**
(45) Date de publication et mention de la délivrance du brevet: **12.04.2006**
(21) Numéro de dépôt: 02796863.5
(22) Date de dépôt: 22.11.2002
(51) Int. Cl.: B62D 21/11

(54) **STRUCTURE AVANT DE VEHICULE AUTOMOBILE EN BERCEAU DESTINEE A RELIER LES LONGERONS DE LA STRUCTURE DE CAISSE**
VORDERER HILFSRAHMEN ZUR VERBINDUNG DER RAHMENLÄNGSTRÄGER EINES KRAFTFAHRZEUGES
MOTOR VEHICLE FRONT CRADLE-SHAPED STRUCTURE DESIGNED TO LINK THE SIDE-MEMBERS OF THE BODY SHELL STRUCTURE

(30) Priorité: 26.11.2001 FR 0115269
(43) Date de publication de la demande: 25.08.2004
(73) Titulaire: Renault s.a.s., 92100 Boulogne Billancourt (FR)
(72) Inventeur: LAVILLUNIERE, Vincent, F-95220 Herblay (FR); SZYMANSKI, Joël, F-78340 Les Clayes Sous Bois (FR)
(86) Numéro de dépôt international: PCT/FR2002/004012
(87) Numéro de publication internationale: WO 2003/045761

(56) Documents cités:
- DE-A- 19 922 800
- GB-A- 642 835
- US-A- 4 392 545
- PATENT ABSTRACTS OF JAPAN vol. 2000, no. 20, 10 juillet 2001 (2001-07-10) & JP 2001 071946 A (NISSAN MOTOR CO LTD), 21 mars 2001 (2001-03-21) & US 6 328 377 B1 (NISSAN MOTOR COMPANY) 11 décembre 2001 (2001-12-11)
- PATENT ABSTRACTS OF JAPAN vol. 015, no. 049 (M-1078), 6 février 1991 (1991-02-06) & JP 02 283577 A (NISSAN MOTOR CO LTD), 21 novembre 1990 (1990-11-21)

## Description

L'invention concerne une structure avant de véhicule automobile à traction avant, et plus spécialement la partie de berceau ou de châssis auxiliaire destinée à relier à l'avant et à doubler vers le bas les longerons du châssis du véhicule, à absorber une partie de l'énergie en cas de choc frontal et à supporter un certain nombre de composants du véhicule tels que les suspensions de roues et la direction.

On connaît par exemple par le document FR 2 798 109 une structure avant de véhicule comportant un berceau court reliant les longerons et fixé à eux d'une part par des fixations arrière et d'autre part par des fixations avant formant des extensions ou cornes.

On connaît aussi un châssis auxiliaire par le document DE 42 30 669 ou par le document EP 0 926 048.

Le document DE 199 22 800 A dévoile aussi une structure avant de véhicule automobile telle que décrite par le préambule de la revendication 1.

Le but de l'invention est de proposer une nouvelle structure de berceau, qui soit à la fois légère et performante au "crash" (écrasemement lors d'un choc), et d'un coût compétitif par rapport à une structure traditionnelle.

L'invention atteint son but grâce à une structure avant de véhicule automobile en berceau destinée à relier les longerons de la structure de caisse, et formant un cadre dont deux côtés sont parallèles aux longerons, caractérisée en ce qu'elle est composée d'une pièce avant en aluminium et d'une pièce arrière en acier reliées et immobilisées par une pièce intermédiaire massive en aluminium. Avantageusement, la pièce intermédiaire est soudée à la pièce avant et vissée à la pièce arrière.

Les pièces avant et arrière comportent des moyens de fixation avant et arrière à la structure de caisse.

La pièce intermédiaire massive comporte la corne de fixation intermédiaire du berceau à la structure de caisse.

La pièce intermédiaire massive comporte la chape d'articulation horizontale du premier point du bras ou triangle de suspension de roue et peut aussi comporter la fixation du second point d'articulation verticale du triangle de suspension.

La pièce avant et la pièce arrière sont de préférence réalisée en éléments mécano-soudés, et forment avantageusement un demi-cadre rectangulaire.

D'autres caractéristiques et avantages de l'invention ressortiront à la lecture de la description qui va suivre, en référence aux dessins annexés sur lesquels :
- la figure 1 est une vue en perspective d'un mode de réalisation du berceau conforme à l'invention ;
- la figure 2 est une vue partielle en perspective d'une variante de berceau conforme à l'invention.

Le berceau 1, de type hybride aluminium-acier, comporte essentiellement trois parties de l'avant du véhicule à l'arrière, formant globalement un cadre sensiblement rectangulaire, relevé à l'avant, cadre dont les deux côtés longitudinaux sont parallèles et reliés aux deux longerons 20 de la structure de caisse, dont on a seulement représenté en tirets l'extrémité relevée 21 de l'un d'eux.

A l'avant, une première pièce 2 forme le demi-cadre avant. Elle est réalisée à partir d'éléments en aluminium extrudé mécano-soudés pour former des poutres puis formés (cintrage ou étirage par exemple). Elle assure la liaison à l'avant entre la structure de caisse 20, 21 et le berceau grâce à ses deux plots de fixation avant 12, et avec des pièces de liaisons intermédiaires 23. Par sa place à l'avant et sa structure en aluminium, la partie 2 joue un rôle important d'absorption des chocs avant.

A l'arrière, une seconde pièce 3 forme le demi-cadre arrière. Elle est réalisée à partir d'éléments en acier mécano-soudés pour former des poutres et elle intègre les deux plots 11 de fixation arrière sur la structure de caisse 20, 21.

Entre les deux pièces 2 et 3 se situe une pièce intermédiaire massive en aluminium moulé qui sert à la fixation de l'une, 5, des deux articulations du triangle de suspension 6 de roue, en formant une chape appropriée d'axe horizontal 14. La pièce intermédiaire 4 sert également à réaliser la corne 7 de liaison intermédiaire entre le berceau 1 et la structure de caisse 20, 21.

La pièce 4 sert aussi à réaliser la liaison entre la partie avant 2 en aluminium et la partie arrière 3 en acier. Pour ce faire, la partie avant 2 est soudée par des soudures 8 aux blocs 4, et ceux-ci sont solidarisés à la partie arrière par des vis 9.

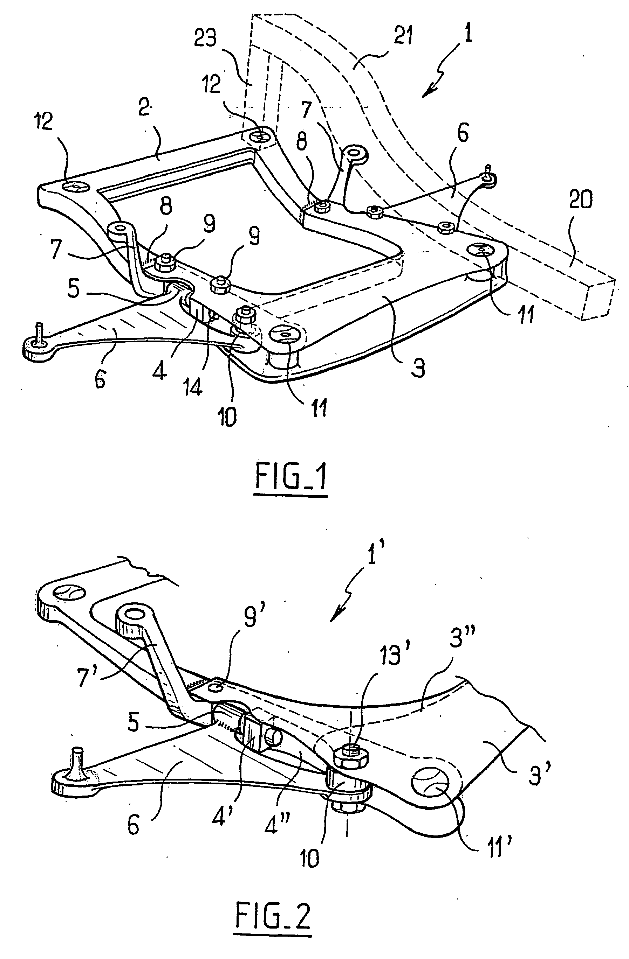

Dans le mode de réalisation- de la figure 1, la deuxième-articulation, verticale, 10 du bras de suspension 6 est disposée dans la partie arrière 3 en acier.

Dans un autre mode de réalisation représenté sur la figure 2, la pièce intermédiaire massive 4' se prolonge plus loin vers l'arrière par une partie 4" qui intègre la fixation du second point 10 du bras de suspension 6, ainsi que le plot de fixation arrière 11' sur le longeron. La partie arrière 3' du berceau l'vient lier les deux pièces intermédiaires 4', cette liaison étant réalisée par vissage. La fixation peut se faire par une première vis 9' située en face de la corne 7' de chape du premier point 5 du bras de suspension 6, et une seconde vis 13' coïncidant avec la fixation du point 10 du bras 6. Selon une autre possibilité, esquissée en tirets sur la figure 2, la partie arrière 3" est encore plus réduite et est fixée par la vis 13' et une vis non représentée située à côté du plot 11' de fixation sur caisse, entre celui-ci et la vis 13'.

Ce second mode de réalisation permet de garantir une meilleure tenue de l'arrière du berceau au cours d'un "crash", ce qui permet d'augmenter l'énergie dissipée. Par ailleurs, ce concept permet d'améliorer la rigidité spécifique du berceau, et donc de diminuer les transferts de bruit de la route vers les longerons.

## Revendications

1. Structure avant de véhicule automobile en berceau (1, 1') destinée à relier les longerons de la structure de caisse (20, 21), et formant un cadre dont deux côtés sont parallèles aux longerons, cette structure étant telle qu'elle est composée d'une pièce avant (2, 2') en aluminium et étant **caractérisée en ce qu'**elle est aussi composée d'une pièce arrière (3, 3') en acier, les pièces avant (2, 2') et arrière (3, 3') étant reliées et immobilisées, par une pièce intermédiaire (4, 4') massive en aluminium.

2. Structure selon la revendication 1, **caractérisée en ce que** la pièce intermédiaire (4, 4') est soudée à la pièce avant (2, 2')

3. Structure selon l'une quelconque des revendications 1 ou 2, **caractérisée en ce que** la pièce intermédiaire (4, 4') est vissée à la pièce arrière (3, 3').

4. Structure selon l'une quelconque des revendications 1 à 3, **caractérisée en ce que** les pièces avant (2, 2') et arrière (3, 3') comportent des moyens de fixation avant et arrière à la structure de caisse (20, 21).

5. Structure selon l'une quelconque des revendications 1 à 4, **caractérisée en ce que** la pièce intermédiaire massive (4, 4') comporte la corne (7, 7') de fixation intermédiaire du berceau (1, 1') à la structure de caisse (20, 21).

6. Structure selon l'une quelconque des revendications 1 à 5, **caractérisée en ce que** la pièce intermédiaire massive (4, 4') comporte la chape d'articulation d'un point (5) du triangle de suspension (6).

7. Structure selon la revendication 6, **caractérisée en ce que** la pièce intermédiaire massive (4, 4') comporte la fixation du second point (10) du triangle de suspension (6).

8. Structure selon l'une quelconque des revendications 1 à 7, **caractérisée en ce que** la pièce avant (2, 2') et/ou la pièce arrière (3, 3') est réalisée en éléments mécano-soudés.

9. Structure selon l'une quelconque des revendications 1 à 8, **caractérisée en ce que** la pièce avant (2, 2') et/ou la pièce arrière (3, 3') forme un demi-cadre.

## Patentansprüche

1. Vordere Struktur eines Kraftfahrzeugs in Bogenform (1, 1'), welche dafür bestimmt ist, die Längsträger der Karosseriestruktur (20, 21) zu verbinden, und welche einen Rahmen bildet, dessen zwei Seiten parallel zu den Längsträgern sind, wobei diese Struktur derart ist, dass sie aus einem vorderen Teil (2, 2') aus Aluminium zusammengesetzt ist, und **dadurch gekennzeichnet, dass** sie ebenso aus einem hinteren Teil (3, 3') aus Stahl zusammengesetzt ist, wobei das vordere Teil (2, 2') und das hintere Teil (3, 3') durch ein massives Zwischenteil (4, 4') aus Aluminium verbunden und festgelegt sind.

2. Struktur nach Anspruch 1, **dadurch gekennzeichnet, dass** das Zwischenteil (4, 4') an dem vorderen Teil (2, 2') angeschweißt ist.

3. Struktur nach irgendeinem der Ansprüche 1 oder 2, **dadurch gekennzeichnet, dass** das Zwischenteil (4, 4') an dem hinteren Teil (3, 3') angeschraubt ist.

4. Struktur nach irgendeinem der Ansprüche 1 bis 3, **dadurch gekennzeichnet, dass** das vordere Teil (2, 2') und das hintere Teil (3, 3') vordere und hintere Mittel zur Befestigung an der Karosseriestruktur (20, 21) aufweisen.

5. Struktur nach irgendeinem der Ansprüche 1 bis 4, **dadurch gekennzeichnet, dass** das massive Zwischenteil (4, 4') den Zwischenbefestigungszipfel (7, 7') des Bogens (1, 1') an der Karosseriestruktur (20, 21) aufweist.

6. Struktur nach irgendeinem der Ansprüche 1 bis 5, **dadurch gekennzeichnet, dass** das massive Zwischenteil (4, 4') den Anlenkungsbügel eines Punktes (5) des Aufhängungsdreiecks (6) aufweist.

7. Struktur nach Anspruch 6, **dadurch gekennzeichnet, dass** das massive Zwischenteil (4, 4') die Befestigung des zweiten Punktes (10) des Aufhängungsdreiecks (6) aufweist.

8. Struktur nach irgendeinem der Ansprüche 1 bis 7, **dadurch gekennzeichnet, dass** das vordere Teil (2, 2') und/oder das hintere Teil (3, 3') als mechanisch-geschweißte Elemente realisiert sind.

9. Struktur nach irgendeinem der Ansprüche 1 bis 8, **dadurch gekennzeichnet, dass** das vordere Teil (2, 2') und/oder das hintere Teil (3, 3') einen Halbrahmen bilden.

## Claims

1. A motor vehicle cradle-shaped front structure (1, 1') intended to connect the side members of the body shell structure (20, 21) and forming a frame of which two sides are parallel to the side members, said structure being such that it is composed of a front part (2, 2') of aluminium and being **characterised in that** it is also composed of a rear part (3, 3') of steel, the front (2, 2') and rear (3, 3') parts being connected and immobilised by a solid intermediate part (4, 4') of aluminium.

2. A structure according to claim 1 **characterised in that** the intermediate part (4, 4') is welded to the front part (2, 2').

3. A structure according to either one of claims 1 and 2 **characterised in that** the intermediate part (4, 4') is screwed to the rear part (3, 3').

4. A structure according to any one of claims 1 to 3 **characterised in that** the front (2, 2') and rear (3, 3') parts comprise means for fixing at front and rear to the body shell structure (20, 21).

5. A structure according to any one of claims 1 to 4 **characterised in that** the solid intermediate part (4, 4') comprises the arm (7, 7') for intermediate fixing of the cradle (1, 1') to the body shell structure (20, 21).

6. A structure according to any one of claims 1 to 5 **characterised in that** the solid intermediate part (4, 4') comprises the joint for pivotal mounting of a point (5) of the suspension wishbone (6).

7. A structure according to claim 6 **characterised in that** the solid intermediate part (4, 4') comprises the fixing of the second point (10) of the suspension wishbone (6).

8. A structure according to any one of claims 1 to 7 **characterised in that** the front part (2, 2') and/or the rear part (3, 3') is made of mechano-welded elements.

9. A structure according to any one of claims 1 to 8 **characterised in that** the front part (2, 2') and/or the rear part (3, 3') forms a half-frame.
